# EUROPÄISCHE PATENTSCHRIFT

(11) **EP 3 145 785 B1**
(45) Veröffentlichungstag und Bekanntmachung des Hinweises auf die Patenterteilung: **17.07.2019**
(21) Anmeldenummer: 15727587.6
(22) Anmeldetag: 22.05.2015
(51) Int. Cl.: B61D 1/00, B60R 13/08, B61D 17/18

(54) **THERMISCHES ISOLIERELEMENT UND VERFAHREN ZUR MONTAGE EINES THERMISCHEN ISOLIERELEMENTS AN EINE INNENRAUMOBERFLÄCHE EINES SCHIENENFAHRZEUGS**
THERMAL INSULATING ELEMENT AND METHOD FOR ASSEMBLING A THERMAL INSULATING ELEMENT ON AN INTERIOR SURFACE OF A RAIL VEHICLE
ÉLÉMENT D'ISOLATION THERMIQUE ET PROCÉDÉ DE MONTAGE D'UN ÉLÉMENT D'ISOLATION THERMIQUE SUR UNE SURFACE DE L'HABITACLE D'UN VÉHICULE SUR RAILS

(30) Priorität: 23.05.2014 DE 102014107290
(43) Veröffentlichungstag der Anmeldung: 29.03.2017
(73) Patentinhaber: SSC Swiss Shielding Corporation AG, 9403 Goldach (CH)
(72) Erfinder: FEHR, Ernst, CH-9400 Rorschach (CH)
(74) Vertreter: Kotitschke, Ralf Thomas
(86) Internationale Anmeldenummer: PCT/EP2015/061368
(87) Internationale Veröffentlichungsnummer: WO 2015/177335

(56) Entgegenhaltungen:
- CN-U- 203 211 315
- DE-A1- 19 934 620
- DE-U1- 29 511 622
- JP-A- H1 120 687
- JP-A- 2001 071 899
- JP-A- 2006 123 614

## Beschreibung

Die vorliegende Erfindung betrifft ein thermisches Isolierelement zur thermischen Innenraumisolierung eines Schienenfahrzeugs sowie ein Verfahren zur Montage eines thermischen Isolierelements an eine Innenraumoberfläche eines Schienenfahrzeugs.

Führerstände und Fahrgasträume von Schienenfahrzeugen werden gewöhnlich wärmeisoliert, um für ein behagliches Klima für die darin anwesenden Personen zu sorgen. Für die thermische Isolierung von Schienenfahrzeugen werden herkömmlich beispielsweise Mineralwolle und Glasfasermatten verwendet, die einseitig mit einer Aluminiumfolie belegt sind. Aber auch Weichschäume auf Basis von Melaminharz werden zu diesem Zweck eingesetzt. Sämtliche Wärmeisoliermaterialien dienen gleichzeitig auch als Schalldämpfung, um Fahrgeräusche und allgemein Lärm weitestgehend zu minimieren. Diese thermischen Isoliermaterialien sind entweder selbstklebend oder werden durch eine eigens aufgebrachte Klebermasse oder mechanisch an der innenraumseitigen Oberfläche des Schienenfahrzeugs befestigt. Sämtliche Materialien erfüllen zudem auch die einschlägigen Brandnormen.

Insbesondere die noch häufig verwendete Mineralwolle und der Melaminharzschaum neigen dazu, Kondenswasser aufzunehmen, das sich an der Innenoberfläche der Außenhaut des Schienenfahrzeugs aufgrund eines zwischen dem Innenraum und der Umgebung des Schienenfahrzeugs vorliegenden Temperaturgradienten bildet. Die Aufnahme des Kondenswassers oder einer anderen Feuchtigkeit kann dazu führen, dass diese Materialien an Gewicht zunehmen und in Teilbereichen sogar in sich zusammen sacken. Dies kann dann zu einer Freilegung der metallischen Außenhaut führen, so dass eine Wärmeisolierung in diesen Bereichen des Schienenfahrzeugs nicht mehr gegeben ist. Aber auch die ebenso zur Wärmeisolierung von Schienenfahrzeugen eingesetzten Glasfasermatten und Weichschäume sind zu einem gewissen Grad wasserabsorbierend, und wenngleich diese Materialien weniger dazu neigen, bei Aufnahme von Feuchtigkeit in sich zusammen zu sacken, kommt es zu einer Verringerung der Isolationsfähigkeit und zu einer unerwünschten Bakterienbildung in diesen Isoliermaterialien.

Aus der JP 2001 071899 A ist zur thermischen Innenraumisolierung eines Schienenfahrzeugs ein thermisches Isolierelement bekannt, das aus einer beidseitig mit Aluminiumplatten verkleideten Schaumharzplatte besteht; aus der CN 203 211 315 U ist darüber hinaus der Einsatz in Schienenfahrzeugen von aus geschlossenzelligem Werkstoff wie z.B. Polyethylen-Schaum hergestellten Isolierlementen bekannt.

Eine Aufgabe der vorliegenden Erfindung besteht zum einen darin, eine verbesserte und insbesondere gleichbleibende thermische Isolierung für Schienenfahrzeuge bereitzustellen, welche die aus dem Stand der Technik bekannten Nachteile eliminiert, und zum anderen ein Montageverfahren bereitzustellen, mit Hilfe dessen eine dauerhafte und gleichbleibende Isolationsfähigkeit der thermischen Isolierung gewährleistet wird.

Diese Aufgabe wird einerseits durch das im Patentanspruch 1 angegebene thermische Isolierelement und andererseits durch das im Patentanspruch 12 angegebene Verfahren gelöst. Bevorzugte bzw. optionale Merkmale der Erfindung sind in den abhängigen Patentansprüchen 2 bis 11 bzw. 13 bis 17 angegeben.

Gemäß einem ersten Aspekt der Erfindung wird ein thermisches Isolierelement zur thermischen Innenraumisolierung eines Schienenfahrzeugs bereitgestellt, das dadurch gekennzeichnet ist, dass es eine Länge, eine Breite und eine Dicke besitzt, zumindest teilweise aus einem geschlossenzelligen Schaumwerkstoff hergestellt ist und an seiner äußeren Oberfläche eine Vielzahl von Dehnfugen aufweist. Des Weiteren sind die Dehnfugen rasterförmig angeordnet. Ein erster Teil der Dehnfugen ist an einer ersten äußeren Oberfläche und ein zweiter Teil der Dehnfugen ist an einer gegenüberliegenden zweiten äußeren Oberfläche des Isolierelements angeordnet. Zumindest ein Teil der Dehnfugen besitzt eine Tiefe, die größer als die halbe Dicke des Isolierelements ist.

Vorzugsweise erstrecken sich die Dehnfugen von einer ersten Kante des Isolierelements.

Weiterhin bevorzugt erstrecken sich die Dehnfugen von der ersten Kante zu einer zweiten Kante des Isolierelements.

Eine bevorzugte Ausgestaltung der Erfindung liegt vor, wenn zumindest ein Teil der Dehnfugen sich jeweils über die gesamte Länge und/oder Breite des Isolierelements erstreckt.

Noch bevorzugter sind die Dehnfugen äquidistant zueinander angeordnet.

Weiterhin bevorzugt kreuzen die Dehnfugen einander.

Vorteilhaft ist es auch, wenn der erste Teil der Dehnfugen und der zweite Teil der Dehnfugen, die sich jeweils in die gleiche Richtung erstrecken, versetzt zueinander angeordnet sind.

Vorzugsweise entspricht der Versatz dem halben Abstand benachbarter Dehnfugen.

Weiterhin bevorzugt ist der geschlossenzellige Werkstoff ein geschlossenzelliger Polyethylen-Schaum.

Und noch bevorzugter ist der geschlossenzellige Werkstoff ein physikalisch vernetzter geschlossenzelliger Polyethylen-Schaum.

Gemäß einer weiteren bevorzugten Ausführungsform der Erfindung umfasst das thermische Isolierelement des Weiteren mindestens ein Befestigungsmittel, das kraft- und/oder formschlüssig und/oder stoffschlüssig mit dem geschlossenzelligen Werkstoff verbunden ist.

Vorzugsweise umfasst das Befestigungsmittel einen in dem geschlossenzelligen Werkstoff kraft- und/oder formschlüssig verankerten Abschnitt und eine Scheibe, die sich in Anlage mit der äußeren Oberfläche befindet.

Weiterhin bevorzugt umfasst der Abschnitt einen Dübel und eine in dem Dübel aufgenommene Schraube, wobei die Scheibe mittels der Schraube an der äußeren Oberfläche fest fixiert ist.

Eine bevorzugte Ausführungsform der Erfindung betrifft ein System, das eine Vielzahl von solchen thermischen Isolierelementen umfasst, die bedarfsgerecht an die Innenraumgeometrie des Schienenfahrzeugs zugeschnitten und gemäß einem Montageplan beschriftet sind.

Weiterhin bevorzugt umfasst das System des Weiteren einen Kleber und einen Montageplan.

Gemäß einem zweiten Aspekt der Erfindung wird ein Verfahren zur Montage eines thermischen Isolierelements an eine Innenraumoberfläche eines Schienenfahrzeugs bereitgestellt, mit den Schritten:
Bereitstellen eines thermischen Isolierelements, das eine Länge, eine Breite und eine Dicke besitzt und zumindest teilweise aus einem geschlossenzelligen Werkstoff hergestellt ist, und
Anbringen des Isolierelements an eine innenraumseitige Oberfläche des Schienenfahrzeugs.

Vorzugsweise weist mindestens eine Oberfläche des thermischen Isolierelements eine Drainagestruktur für Wasser auf.

Noch bevorzugter weist die Drainagestruktur eine wellenförmige Struktur mit einer Vielzahl von Erhöhungen und Vertiefungen auf.

Weiterhin bevorzugt wird eine Bodenfläche des Schienenfahrzeugs mit dem thermischen Isolierelement verkleidet.

Gemäß einer weiteren bevorzugten Ausführungsform des zweiten Aspekts der Erfindung weist das thermische Isolierelement an seiner äußeren Oberfläche eine Vielzahl von Dehnfugen auf, und das Verfahren umfasst des Weiteren den Schritt des Anbringens von mindestens einem Befestigungsmittel an dem Isolierelement derart, dass es kraft- und/oder form- und/oder stoffschlüssig mit dem Isolierelement verbunden und eine freiliegende Oberfläche des Befestigungsmittels im Wesentlichen bündig mit der äußeren Oberfläche des Isolierelements ist.

Vorzugsweise umfasst das Verfahren des Weiteren den Schritt des Aufbringens eines Klebers auf die freiliegende Oberfläche des Befestigungsmittels.

Noch bevorzugter werden bei dem Verfahren eine Vielzahl von thermischen Isolierelementen bereitgestellt, die wie vorstehend beschrieben ausgebildet ist, wobei das Verfahren zwischen den Schritten des Bereitstellens der thermischen Isolierelemente und des Anbringens der Befestigungsmittel an den Isolierelementen die Isolierelemente bedarfsgerecht an die Innenraumgeometrie des Schienenfahrzeugs zugeschnitten und gemäß einem Montageplan beschriftet werden.

Die vorliegende Erfindung wird nun rein beispielhaft anhand bevorzugter Ausführungsformen beider Aspekte der Erfindung unter Hinzunahme der beigefügten Figuren beschrieben. Von den Figuren zeigen:
- Fig. 1: ein thermisches Isolierelement gemäß einer bevorzugten Ausführungsform der Erfindung, und
- Fig. 2: das in Fig. 1 dargestellte thermische Isolierelement, das zusätzlich mit einem Befestigungsmittel versehen ist zur Montage des thermischen Isolierelements an eine Innenraumoberfläche eines Schienenfahrzeugs.

Ein erster Aspekt der Erfindung betrifft ein thermisches Isolierelement, dessen bestimmungsgemäße Verwendung die thermische Innenraumisolierung (Boden und/oder Decke und/oder Wand) eines Schienenfahrzeugs betrifft. Es handelt sich dabei sozusagen um eine thermische Schienenfahrzeuginnenraumisolierung. Wenngleich das erfindungsgemäße thermische Isolierelement speziell für die optimierte Isolierung von Schienenfahrzeugen konzipiert ist, so ist der Einsatz des Isolierelements prinzipiell auch im Flugzeugbau. Schiffsbau und bei schienenlosen Fahrzeugen, beispielsweise in Wohnmobilen, Bussen, klimatisierten Kühlanhängern und Lastkraftwagen denkbar.

Zunächst wird der Aufbau des thermischen Isolierelements gemäß einer bevorzugten Ausführungsform des ersten Aspektes der Erfindung beschrieben, und sodann wird dessen Montage gemäß einer bevorzugten Ausführungsform eines zweiten Aspektes der Erfindung erläutert. Im Anschluss werden vorteilhafte Wirkungen beider Aspekte der Erfindung beschrieben.

Das thermische Isolierelement, das zusätzlich auch als akustisches Dämmmaterial dienen kann, kann jedwede Form besitzen. So kommen rechteckige, quadratische, runde, polygonale, trapezförmige oder verjüngt ausgebildete Platten, mit oder ohne sich ändernder Dicke, in Betracht. Aber auch andere Formen sind denkbar, je nachdem welcher Bereich des Innenraums isoliert werden soll. Sämtliche in Betracht kommende Formen können auch solche umfassen, die keine eindeutige und konstant bleibende Länge, Breite oder Dicke aufweisen.

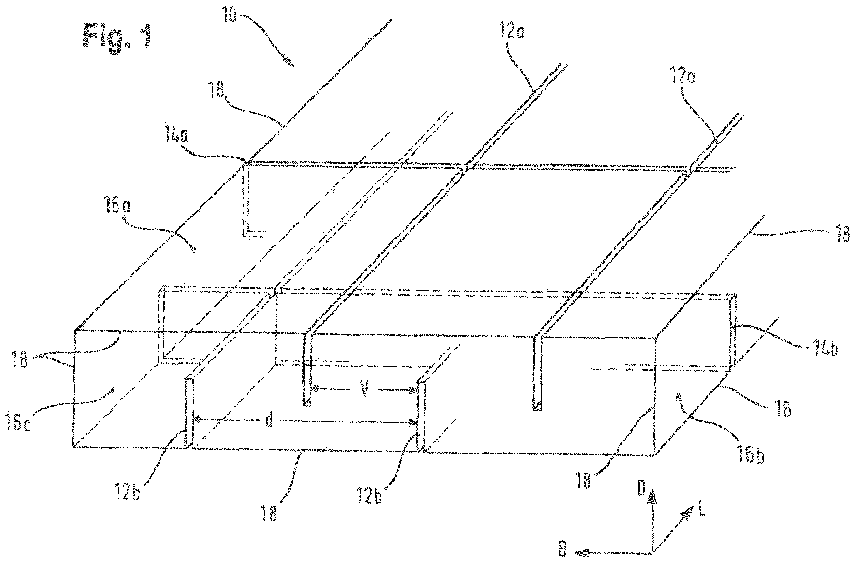

Bei dem in Fig. 1 perspektivisch und in Abriss dargestellten thermischen Isolierelement 10 sind die Längen-, Breiten- und Dickenabmessung L, B, D in einem rechtwinkeligen Koordinatensystem dargestellt. Das hier vorzugsweise als Platte ausgebildete thermische Isolierelement 10 weist bevorzugt eine gleichbleibende Dicke D auf, wobei die Form der Platte vornehmlich durch die Außenkanten 18 festgelegt ist. Je nach Einsatzort kann das Isolierelement 10, wie bereits voranstehend erwähnt, auch eine andere Form und eine variierende Dicke aufweisen. Solche Formen können zusätzliche Außenkanten, z.B. an einem Übergang zwischen einem Bereich mit größerer Dicke und einem Bereich mit geringerer Dicke besitzen, wenngleich an einem solchen Übergang, der abgerundet sein kann, keine eindeutig definierbare Außenkante vorliegt.

Die äußeren Oberflächen 16a, 16b des Isolierelements 10 müssen nicht, wie in Fig. 1 dargestellt ist, planar sein. Denkbar sind auch konvex oder konkav ausgebildete Außenflächen.

Das in Fig. 1 dargestellte Isolierelement 10 weist eine Vielzahl von Dehnfugen 12a, 12b, 14a und 14b auf. Die Dehnfugen 12a und 14a sind dabei auf einer Außenfläche 16a vorgesehen, während die Dehnfugen 12b und 14b auf einer gegenüberliegenden Außenfläche 16b, die durch die Dicke D des Isolierelementes 10 von der Außenfläche 16a beabstandet ist, vorgesehen sind. Die Dehnfugen 12a, 12b verlaufen in Längsrichtung L des Isolierelementes 10, während die Dehnfugen 14a, 14b entlang der Breitenrichtung B verlaufen.

Vorzugsweise sind die Dehnfugen 12a parallel zueinander, d.h. äquidistant zueinander angeordnet. Gleiches gilt für die Dehnfugen 12b an der Außenfläche 16b. Je nach Größe des Isolierelements 10 können auch noch zusätzliche, in Breitenrichtung verlaufende Dehnfugen 14a, 14b vorgesehen sein. Die Anzahl der Dehnfugen 12a, 12b, 14a und 14b ist somit nicht auf die in der Fig. 1 dargestellte Anzahl beschränkt.

Die Dehnfugen 12a, 14a kreuzen vorzugsweise einander. Gleiches gilt vorzugsweise für die Dehnfugen 12b und 14b.

Sind die äquidistant verlaufenden und auf der gleichen Außenfläche 16b vorgesehenen Dehnfugen 12b (gleiches gilt vorzugsweise auch für die Dehnfugen 12a, 14a und 14b) in einem Abstand d zueinander angeordnet, so beträgt vorzugsweise der in Breitenrichtung gesehene Versatz V zwischen den Dehnfugen 12a auf der Außenfläche 16a und den Dehnfugen 12b auf der Außenfläche 16b der Hälfte des Abstandes d.

Die Tiefe der Dehnfugen 12a, 12b, 14a und 14b ist vorzugsweise größer als die halbe Dicke D des Isolierelementes.

Die Dehnfugen 12a, 12b, 14a und 14b sind nicht auf die in Fig. 1 dargestellt Form beschränkt. Denkbar sind auch Dehnfugen, die mit zunehmender Tiefe schmäler werden, sozusagen eine Kegelstumpfform im Querschnitt aufweisen.

Wenngleich gemäß Fig. 1 die Dehnfugen 12a, 12b, 14a und 14b sich über die gesamte Länge L und Breite B des Isolierelementes 10 erstrecken, so kann je nach Einsatzort, d.h. vorliegender Geometrie des Innenraums des Schienenfahrzeugs auch genügen, wenn die Dehnfugen 12a, 12b, 14a und 14b sich lediglich von einer Außenkante 18 beginnend über einen vorbestimmten Längenund Breitenbereich, d.h. nicht bis zu einer gegenüberliegenden Außenkante 18 erstrecken.

Des Weiteren ist auch die Anzahl der Dehnfugen 12a, 12b, 14a und 14b abhängig von der Größe und dem Einsatzort des Isolierelementes 10. Somit kann es mitunter auch genügen, wenn jeweils eine Dehnfuge an gegenüberliegenden Außenflächen vorgesehen ist.

Das erfindungsgemäße Isolierelement 10 ist zumindest teilweise aus einem geschlossenzelligen Werkstoff, vorzugsweise einem geschlossenzelligen Schaumwerkstoff gebildet. Bei Bedarf kann dieser geschlossenzellige Schaumwerkstoff auch vorzugsweise mit einem anderen Material oder vorzugsweise mit mehreren weiteren Materialien kombiniert werden, so z.B. mit einem offenporigen, d.h. nicht geschlossenzelligen Melaminschaum. Vorzugsweise ist der geschlossenzellige Schaumwerkstoff ein geschlossenzelliger Polyethylen-Schaum, noch bevorzugter ein physikalisch vernetzter geschlossenzelliger Polyethylen-Schaum. Der geschlossenzellige Polyethylen-Schaum erfüllt vorzugsweise die Brandnormen DIN 5510-2 (S4, SR2, ST2) und EN 45545-2 (R1, HL 2, HL 3), und eignet sich bevorzugt für die von der europäischen Bahnindustrie spezifizierten Klimazonen 2 und 3. Weitere Eigenschaften ergeben sich aus der untenstehenden Tabelle.

| **Eigenschaft** | **Prüfmethode** | **Einheit** | **geschlossenzefliger Polyethylen-Schaum** |
|---|---|---|---|
| **Rohdichte** | BS ISO 7214 1998 | kg/m3 | 15 |
| **Zellgröße** | Intern | mm | 0,90 |
| **Druckspannung** | BS ISO 7214 1998 | kPa | 18 |
| Formänderungscharakteristika 10% Stauchung 50% Stauchung | | kPa | 89 |
| **Druckverformungsrest** | BS ISO 7214 1998, 25mm Dicke | % DVR | 18 |
| | | % DVR | 5 |
| 25% Verformung, 22 Std. 23°C | | | |
| 0,5 Std. Entspannung | | | |
| 24 Std. Entspannung | | | |
| **Zugfestigkeit** | ISO 7214 1998 | kPa | 353 |
| **Bruchdehnung** | | % | 146 |
| **Reißfestigkeit** | BS EN ISO 8067 1995 | N/m | 545 |
| **Shore Härte OO Skala** | ISO 868 1985 | OO | 26 |
| 10mm Dicke ohne Haut | | | |
| **Maximale** | Intern | °C | +95°C |
| **/minimale Arbeitstemperatur** | | | - 70°C |
| **Wärmeleitfähigkeit** | ISO 8302 1991 | W/mK | 0,039 |
| Geprüft bei mittl. Temperatur von 10°C | | | |
| **Brandprüfungen** Bahn | DIN 5510-2, S4, ST2, SR2, EN45545-2 HL2/HL3 | | |
| **Wärmeausdehnungskoeffizient** | Messung | WAK | |
| | Rohmaterial | α in 10-6 K-1 | 360 |
| | mit Dehnsystem | α in 10-6 K-1 | 40 |
| **Plattenmaße** (**L x B)** | **2000mm x 1170mm** | | |
| Dicke ab 5mm in 1mm Abstufung bis 100mm Rohmaße | ab 5mm bis max. 100mm | | |
| | ca. 2050mm x 1200mm x 53mm | | |
| **Blockware (L x B x H)** | **2000mm x 1170mm x max 300mm** | | |

Das thermische Isolierelement kann an der Innenraumoberfläche (Boden, Decke, Wand) des Schienenfahrzeugs auf unterschiedliche Weise befestigt werden, und zwar zum einen abhängig vom Ort und zum anderen von der Dicke des Isolierelements.

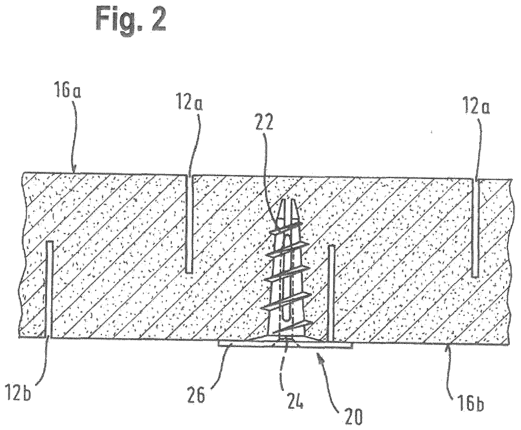

Vorzugsweise wird das Isolierelement bis zu einer Dicke von 20mm einseitig und vollflächig verklebt, insbesondere bei dessen Montage an der Decke und den Wänden des Schienenfahrzeugs. Bei größerer Dicke wird das Isolierelement mit Hilfe von Befestigungsmitteln 20 befestigt (Fig. 2). Zu diesem Zweck wird zunächst vorzugsweise ein selbstschraubender bzw. selbstschneidender Dübel 22 in den geschlossenzelligen Schaumwerkstoff eingebracht. Mittels einer Schraube 24, die in den Dübel 22 eingeschraubt wird, wird eine Scheibe oder Platte 26 in Anlage mit der Außenfläche 16b des Isolierelementes 10 gebracht. Durch Festziehen der Schraube 24 wird die Platte 26 fixiert. Auf die freiliegende Fläche der Platte 26 wird eine Klebermasse aufgebracht, und mittels der Klebermasse wird das Isolierelement mit der Innenoberfläche der Wand und/oder Decke des Schienenfahrzeugs verbunden.

Je nach Größe des Isolierelementes 10 kann eine Vielzahl solcher Befestigungsmittel 20 vorgesehen sein. Vorzugsweise sind die Platte 26 und die Schraube 26 aus einem Metall gefertigt. Diese Art der Befestigung hat den Vorteil, dass das Befestigungsmittel 20 bedarfsgerecht an jeder beliebigen Stelle der Außenfläche 16a, 16b des Isolierelementes 10 vorgesehen werden kann. Auch in Bereichen, in denen das Isolierelement 10 beim bestimmungsgemäßen Gebrauch und im eingebauten Zustand einer größeren Belastung ausgesetzt ist, können Befestigungsmittel 20 in einer größeren Dichte und/oder Platten 26 mit einer größeren freiliegenden Fläche vorgesehen werden.

Soll z.B. der Boden des Schienenfahrzeugs isoliert werden, kann das Isolierelement, das ansonsten die gleichen Materialeigenschaften aufweist wie ein Isolierelement, das an einer Wand oder einer Decke des Schienenfahrzeugs montiert wird, auch keinerlei Dehnfugen und Befestigungsmittel aufweisen. Vielmehr ist es in diesen Fall vorteilhaft, wenn das Isolierelement eine Drainagestruktur an seiner dem Boden zugewandten Oberfläche aufweist. Diese Drainagestruktur weist vorzugsweise eine Vielzahl von Erhebungen und Vertiefungen auf, so dass sich hierdurch eine wellenförmige Struktur ergibt, durch die Wasser zwischen dem Isolierelement und dem Boden des Schienenfahrzeugs fließen und in einen am Schienenfahrzeug vorgesehenen Abfluss ablaufen kann. Vorzugsweise wird das Isolierelement im Falle einer Bodenmontage lediglich lose verlegt.

Die Isolierelemente 10 mit den darin vorgesehenen Befestigungsmitteln 20 werden nach Bedarf, d.h. abhängig von der Geometrie des Innenraumes des Schienenfahrzeugs zugeschnitten und zu einem Isolationskit zusammengefasst und verpackt. Dies gilt auch für die zur Bodenmontage vorgesehenen Isolierelemente ohne Befestigungsmittel. Jedes Isolierelement 10 kann dabei gemäß einem vorbestimmten Montageplan entsprechend der gewünschten Montagereihenfolge beschriftet werden. Die Isolationskits werden zudem vorzugsweise mit einer Packliste und dem entsprechenden Montageplan ergänzt.

Der Erfinder der vorliegenden Erfindung hat festgestellt, dass ein geschlossenzelliger Werkstoff dank seiner geschlossenen Zellstruktur eine gleichbleibende Wärmeleitfähigkeit (und somit Isolationsfähigkeit) und eine hohe Formstabilität besitzt. Somit können weder die Aufnahme von Feuchtigkeit noch Erschütterungen, die beim Betrieb des Schienenfahrzeugs auftreten, zu einer Einsackung des Werkstoffes führen. Zudem werden eine möglicherweise gesundheitsgefährdende Bakterienbildung im Inneren des Werkstoffes und eine damit möglicherweise im Zusammenhang stehende Zersetzung des Werkstoffes verhindert.

Allerdings kontrahiert und expandiert der geschlossenzellige Werkstoff, insbesondere ein Schaumwerkstoff bei großen Temperaturunterschieden zwischen Schienenfahrzeugaußenseite und -innenseite, denn das in den Zellen befindliche Gas dehnt sich bei höherer Temperatur aus und zieht sich bei fallender Temperatur wieder zusammen. So ist beispielsweise festgestellt worden, dass bei einer Temperaturdifferenz von 90 °C die Abmessungen des geschlossenzelligen Schaumwerkstoffes sich pro Meter um ca. 5 cm ändern können. Der gleiche Effekt tritt auf, wenn der Luftdruck sich stark ändert, wie dies z.B. bei einer Schienenfahrt durch hochgelegene Gebirge auftreten kann. Eine derartig ausgeprägte Expansion und Kontraktion kann zu massiven Schäden am Schienenfahrzeug führen. So kann beispielsweise die metallische Außenhaut des Schienenfahrzeugs herausgedrückt und dadurch deformiert werden.

Die erfindungsgemäß vorgesehene Dehnfugen sollen dabei diese Expansion und Kontraktion des geschlossenzelligen Werkstoffes kompensieren. Aus diesem Grund werden bei einer Länge (oder Breite) des Isolierelementes von einem Meter vorzugsweise mindestens zwei Dehnfugen mit einer Breite von 2 bis 3mm, vorzugsweise 2 bis 2,5 mm vorgesehen.

Dadurch, dass Dehnfugen 12a, 12b, 14a, 14b an gegenüberliegenden Außenflächen 16a, 16b des Isolierelements 10 vorgesehen sind und die Tiefe mindestens zweier an gegenüberliegenden Außenflächen angeordneter Dehnfugen 12a, 12b vorzugsweise jeweils mindestens der halben Dicke D (bei variierender Dicke entspricht die Dicke D der Dicke des Isolierelements in diesem Bereich) des Isolierelementes entspricht, gibt es somit keine über die gesamte Länge oder Breite des Isolierelements verlaufende Linie, die nicht von mindestens einer Dehnfuge gekreuzt wird. Dies wiederum bedeutet, dass jeder noch so dünne Schichtabschnitt (wenn man sich vorstellt, dass das gesamte Isolierelement aus einer Vielzahl von in Dickenrichtung gestapelten Schichtabschnitten aufgebaut ist) sich so stark ausdehnen oder auch zusammenziehen kann, dass eine signifikante Wölbung einer der Außenflächen 16a, 16b vermieden wird.

Die Dehnfugen sind zusätzlich noch weiter dahingehend vorteilhaft, dass sich das Isolierelement besser an gewölbte Flächen des Schienenfahrzeugs bei der Montage anpassen kann.

Des Weiteren ist der Brandschutz verbessert, da die komplette Innenfläche des Schienenfahrzeugs gleichbleibend und dauerhaft ausgekleidet bleibt mit einer Isolierung, die sämtliche vorgeschriebenen Brandnormen erfüllt.

Wird vorzugsweise das in Fig. 2 dargestellte Befestigungsmittel 20 zur Montage des Isolierelements am Schienenfahrzeug eingesetzt, kann hierdurch eine zuverlässige und dauerhafte Verbindung des Isolierelements mit dem Schienenfahrzeug erzielt werden, denn eine eventuell auftretende Kontraktion und Expansion kann durch die lediglich punktuelle Fixierung des Isolierelements besser kompensiert werden als durch eine vollflächige Verklebung. Auch nach mehrjährigem Fahrbetrieb des Schienenfahrzeugs bleibt das Isolierelement so dauerhaft fest verbunden, wodurch eine gleichbleibende und dauerhafte Isolationsfähigkeit gewährleistet wird.

Dadurch, dass sich die Dehnfugen auf der Außenfläche kreuzen, kann beim Anbringen des Isolierelements die zwischen Isolierelement und Schienenfahrzeug befindliche Luft besser entweichen, was wiederum die Montage deutlich vereinfacht.

Als Kleber wird vorzugsweise ein acrylatdispersionsfreier Kleber verwendet. Aber auch ein Acrylklebeband kann bei dünneren Platten verwendet werden. So ist beispielsweise ein geschlossenzelliger Polyethylen-Schaum resistent gegenüber solchen Klebern, und der Einsatz eines solchen Klebers führt sowohl bei einer vollflächigen Verklebung als auch bei einer Befestigung mittels eines in Fig. 2 gezeigten Befestigungsmittels zu keiner Beschädigung der geschlossenen Zellstruktur.

## Patentansprüche

1. Thermisches Isolierelement (10) zur thermischen Innenraumisolierung eines Schienenfahrzeugs, das eine Länge (L), eine Breite (B) und eine Dicke (D) besitzt und an seiner äußeren Oberfläche (16a, 16b, 16c) eine Vielzahl von Dehnfugen (12a, 12b, 14a, 14b) aufweist, **dadurch gekennzeichnet, dass** es zumindest teilweise aus einem geschlossenzelligen Werkstoff hergestellt ist, und dass die Dehnfugen (12a, 12b, 14a, 14b) rasterförmig angeordnet sind, und dass ein erster Teil der Dehnfugen (12a, 14a) an einer ersten äußeren Oberfläche (16a) und ein zweiter Teil der Dehnfugen (12b, 14b) an einer gegenüberliegenden zweiten äußeren Oberfläche (16b) des Isolierelements (10) angeordnet sind, und dass zumindest ein Teil der Dehnfugen (12a, 12b, 14a, 14b) eine Tiefe besitzt, die größer als die halbe Dicke (D) des Isolierelements (10) ist.

2. Thermisches Isolierelement (10) nach Anspruch 1, **dadurch gekennzeichnet, dass** die Dehnfugen (12a, 12b, 14a, 14b) sich von einer ersten Kante (18) des Isolierelements (10) erstrecken.

3. Thermisches Isolierelement (10) nach Anspruch 1 oder 2, **dadurch gekennzeichnet, dass** die Dehnfugen (12a, 12b, 14a, 14b) sich von der ersten Kante (18) zu einer zweiten Kante (18) des Isolierelements (10) erstrecken.

4. Thermisches Isolierelement (10) nach einem der vorhergehenden Ansprüche, **dadurch gekennzeichnet, dass** zumindest ein Teil der Dehnfugen (12a, 12b, 14a, 14b) sich jeweils über die gesamte Länge (L) und/oder Breite (B) des Isolierelements (10) erstreckt.

5. Thermisches Isolierelement (10) nach Anspruch 4, **dadurch gekennzeichnet, dass** die Dehnfugen (12a, 12b, 14a, 14b) äquidistant zueinander angeordnet sind.

6. Thermisches Isolierelement (10) nach Anspruch 1, **dadurch gekennzeichnet, dass** der erste Teil der Dehnfugen (12a, 14a) und der zweite Teil der Dehnfugen (12b, 14b), die sich jeweils in die gleiche Richtung erstrecken, versetzt zueinander angeordnet sind.

7. Thermisches Isolierelement (10) nach Anspruch 6, **dadurch gekennzeichnet, dass** der Versatz (V) dem halben Abstand (d) benachbarter Dehnfugen entspricht.

8. Thermisches Isolierelement (10) nach einem der vorhergehenden Ansprüche, **dadurch gekennzeichnet, dass** der geschlossenzellige Werkstoff ein geschlossenzelliger Polyethylen-Schaum, vorzugsweise ein physikalisch vernetzter geschlossenzelliger Polyethylen-Schaum, ist.

9. Thermisches Isolierelement (10) nach einem der vorhergehenden Ansprüche, des Weiteren umfassend mindestens ein Befestigungsmittel (20), das kraft- und/oder form- und/oder stoffschlüssig mit dem geschlossenzelligen Werkstoff verbunden ist, und dass vorzugsweise das Befestigungsmittel (20) einen in dem geschlossenzelligen Werkstoff kraft- und/oder formschlüssig verankerten Abschnitt (24) und eine Scheibe (26), die sich in Anlage mit der äußeren Oberfläche (16a, 16b, 16c) befindet, umfasst.

10. Thermisches Isolierelement (10) nach Anspruch 9, **dadurch gekennzeichnet, dass** der Abschnitt (24) einen Dübel (22) und eine in dem Dübel (22) aufgenommene Schraube (24) umfasst, wobei die Scheibe (26) mittels der Schraube (24) an der äußeren Oberfläche (16a, 16b, 16c) fest fixiert ist.

11. System, umfassend eine Vielzahl von thermischen Isolierelementen (10) nach einem der vorhergehenden Ansprüche, die bedarfsgerecht an die Innenraumgeometrie des Schienenfahrzeugs zugeschnitten und gemäß einem Montageplan beschriftet sind.

12. Verfahren zur Montage eines thermischen Isolierelements an eine Innenraumoberfläche eines Schienenfahrzeugs, mit den Schritten:
Bereitstellen eines thermischen Isolierelements (10) gemäß einem der Ansprüche 1 bis 10, und Anbringen des Isolierelements (10) an eine innenraumseitige Oberfläche des Schienenfahrzeugs.

13. Verfahren nach Anspruch 12, **dadurch gekennzeichnet, dass** mindestens eine Oberfläche des thermischen Isolierelements eine Drainagestruktur für Wasser aufweist.

14. Verfahren nach Anspruch 13, **dadurch gekennzeichnet, dass** die Drainagestruktur eine wellenförmige Struktur mit einer Vielzahl von Erhöhungen und Vertiefungen aufweist.

15. Verfahren nach Anspruch 12, des Weiteren mit dem Schritt des Anbringens von mindestens einem Befestigungsmittel (20) an dem Isolierelement (10) derart, dass es kraft- und/oder form- und/oder stoffschlüssig mit dem Isolierelement (10) verbunden und eine freiliegende Oberfläche des Befestigungsmittels (20) im Wesentlichen bündig mit der äußeren Oberfläche (16a, 16b, 16c) des Isolierelements (10) ist.

16. Verfahren nach Anspruch 15, des Weiteren mit dem Schritt des Aufbringens eines Klebers auf die freiliegende Oberfläche des Befestigungsmittels (20).

17. Verfahren nach Anspruch 15 oder 16, **dadurch gekennzeichnet, dass** eine Vielzahl von thermischen Isolierelementen (10) bereitgestellt werden, die nach einem der Ansprüche 1 bis 10 ausgebildet ist, und dass zwischen den Schritten des Bereitstellens der thermischen Isolierelemente (10) und des Anbringens der Befestigungsmittel (20) an die Isolierelemente (10) die Isolierelemente (10) bedarfsgerecht an die Innenraumgeometrie des Schienenfahrzeugs zugeschnitten und gemäß einem Montageplan beschriftet werden.

## Claims

1. A thermal insulating element (10) for the thermal interior insulation of a rail vehicle, which has a length (L), a width (B) and a thickness (D) and has a multiplicity of expansion joints (12a, 12b, 14a, 14b) at the outer surface (16a, 16b, 16c) thereof, **characterized in that** the thermal insulating element is produced, at least to some extent, from a closed-cell material, and **in that** the expansion joints (12a, 12b, 14a, 14b) are arranged in a grid-shaped manner, and **in that** a first portion of the expansion joints (12a, 14a) are arranged on a first outer surface (16a) and a second portion of the expansion joints (12b, 14b) are arranged on an opposite second outer surface (16b) of the insulating element (10), and **in that** at least a portion of the expansion joints (12a, 12b, 14a, 14b) has a depth which is larger than half the thickness (D) of the insulating element (10).

2. The thermal insulating element (10) according to Claim 1, **characterized in that** the expansion joints (12a, 12b, 14a, 14b) extend from a first edge (18) of the insulating element (10).

3. The thermal insulating element (10) according to Claim 1 or 2, **characterized in that** the expansion joints (12a, 12b, 14a, 14b) extend from the first edge (18) to a second edge (18) of the insulating element (10).

4. The thermal insulating element (10) according to one of the preceding claims, **characterized in that** at least a portion of the expansion joints (12a, 12b, 14a, 14b) extends over the entire length (L) and/or width (B) of the insulating element (10) in each case.

5. The thermal insulating element (10) according to Claim 4, **characterized in that** the expansion joints (12a, 12b, 14a, 14b) are arranged equidistantly from one another.

6. The thermal insulating element (10) according to Claim 1, **characterized in that** the first portion of the expansion joints (12a, 14a) and the second portion of the expansion joints (12b, 14b), which each extend in the same direction, are arranged offset with respect to one another.

7. The thermal insulating element (10) according to Claim 6, **characterized in that** the offset (V) corresponds to half the spacing (d) of adjacent expansion joints.

8. The thermal insulating element (10) according to one of the preceding claims, **characterized in that** the closed-cell material is a closed-cell polyethylene foam, preferably a physically cross-linked closed-cell polyethylene foam.

9. The thermal insulating element (10) according to one of the preceding claims, furthermore comprising at least one fastening means (20), which is connected in a non-positive and/or positive and/or materially-connected manner to the closed-cell material, and in that the fastening means (20) preferably comprises a section (24) non-positively and/or positively anchored in the closed-cell material and a washer (26), which is in contact with the outer surface (16a, 16b, 16c).

10. The thermal insulating element (10) according to Claim 9, **characterized in that** the section (24) comprises a wall plug (22) and a screw (24) accommodated in the wall plug (22), wherein the washer (26) is securely fixed on the outer surface (16a, 16b, 16c) by means of the screw (24).

11. A system, comprising a multiplicity of thermal insulating elements (10) according to one of the preceding claims, which are cut to size for the interior geometry of the rail vehicle as required and are labelled in accordance with an assembly plan.

12. A method for mounting a thermal insulating element on an interior surface of a rail vehicle, having the steps:
providing a thermal insulating element (10) according to one of Claims 1 to 10, and
attaching the insulating element (10) to an interior-side surface of the rail vehicle.

13. The method according to Claim 12, **characterized in that** at least one surface of the thermal insulating element has a drainage structure for water.

14. The method according to Claim 13, **characterized in that** the drainage structure has a wave-like structure with a multiplicity of elevations and depressions.

15. The method according to Claim 12, additionally having the step of attaching at least one fastening means (20) on the insulating element (10) in such a manner that the fastening means is connected in a non-positive and/or positive and/or materially-connected manner to the insulating element (10) and an exposed surface of the fastening means (20) is substantially flush with the outer surface (16a, 16b, 16c) of the insulating element (10).

16. The method according to Claim 15, additionally having the step of applying an adhesive to the exposed surface of the fastening means (20).

17. The method according to Claim 15 or 16, **characterized in that** a multiplicity of thermal insulating elements (10) are provided, which are constructed according to one of Claims 1 to 10, and **in that**, between the steps of providing the thermal insulating elements (10) and of applying the fastening means (20) to the insulating elements (10), the insulating elements (10) are cut to size for the interior geometry of the rail vehicle as required and are labelled in accordance with an assembly plan.

## Revendications

1. Elément d'isolation thermique (10) pour l'isolation thermique d'un compartiment intérieur d'un véhicule ferroviaire, ayant une longueur (L), une largeur (B) et une épaisseur (D) et comportant, sur sa surface extérieure (16a, 16b, 16c), une pluralité de joints de dilatation (12a, 12b, 14a, 14b), **caractérisé en ce qu'**il est fabriqué au moins en partie à partir d'un matériau à alvéoles fermées, et **en ce que** les joints de dilatation (12a, 12b, 14a, 14b) sont agencés en forme de quadrillage, et **en ce qu'**une première partie des joints de dilatation (12a, 14a) est agencée sur une première surface extérieure (16a) et une seconde partie des joints de dilatation (12b, 14b) est agencée sur une seconde surface extérieure opposée (16b) de l'élément d'isolation (10), et **en ce qu'**au moins une partie des joints de dilatation (12a, 12b, 14a, 14b) a une profondeur qui est supérieure à la moitié de l'épaisseur (D) de l'élément d'isolation (10).

2. Elément d'isolation thermique (10) selon la revendication 1, **caractérisé en ce que** les joints de dilatation (12a, 12b, 14a, 14b) s'étendent à partir d'un premier bord (18) de l'élément d'isolation (10).

3. Elément d'isolation thermique (10) selon la revendication 1 ou 2, **caractérisé en ce que** les joints de dilatation (12a, 12b, 14a, 14b) s'étendent du premier bord (18) jusqu'à un second bord (18) de l'élément d'isolation (10).

4. Elément d'isolation thermique (10) selon l'une des revendications précédentes, **caractérisé en ce qu'**au moins une partie des joints de dilatation (12a, 12b, 14a, 14b) s'étend respectivement sur toute la longueur (L) et/ou sur toute la largeur (B) de l'élément d'isolation (10).

5. Elément d'isolation thermique (10) selon la revendication 4, **caractérisé en ce que** les joints de dilatation (12a, 12b, 14a, 14b) sont agencés à égale distance les uns des autres.

6. Elément d'isolation thermique (10) selon la revendication 1, **caractérisé en ce que** la première partie des joints de dilatation (12a, 14a) et la seconde partie des joints de dilatation (12b, 14b) qui s'étendent respectivement dans la même direction, sont agencées décalées l'une par rapport à l'autre.

7. Elément d'isolation thermique (10) selon la revendication 6, **caractérisé en ce que** le décalage (V) correspond à la moitié de la distance (d) entre joints de dilatation voisins.

8. Elément d'isolation thermique (10) selon l'une des revendications précédentes, **caractérisé en ce que** le matériau à alvéoles fermées est une mousse de polyéthylène à alvéoles fermées, de préférence une mousse de polyéthylène à alvéoles fermées physiquement réticulée.

9. Elément d'isolation thermique (10) selon l'une des revendications précédentes, comprenant au moins un moyen de fixation (20) qui est relié au matériau à alvéoles fermées par adhérence et/ou par complémentarité de forme et/ou de matière, et en ce que, de préférence, le moyen de fixation (20) comprend une partie (24) ancrée par adhérence et/ou par complémentarité de forme dans le matériau à alvéoles fermées et une rondelle (26) qui se trouve en appui sur la surface extérieure (16a, 16b, 16c).

10. Elément d'isolation thermique (10) selon la revendication 9, **caractérisé en ce que** la partie (24) comprend une cheville (22) et une vis (24) reçue dans la cheville (22), dans lequel la rondelle (26) est solidement fixée sur la surface extérieure (16a, 16b, 16c) au moyen de la vis (24).

11. Système comprenant une pluralité d'éléments d'isolation thermique (10) selon l'une des revendications précédentes, qui sont coupés en fonction des besoins pour s'adapter à la géométrie d'un compartiment intérieur du véhicule ferroviaire et qui sont repérés selon un plan de montage.

12. Procédé de montage d'un élément d'isolation thermique sur une surface de compartiment intérieur d'un véhicule ferroviaire, comportant les étapes consistant à :
fournir un élément d'isolation thermique (10) selon l'une des revendications 1 à 10, et
apposer l'élément d'isolation (10) sur une surface côté compartiment intérieur du véhicule ferroviaire.

13. Procédé selon la revendication 12, **caractérisé en ce qu'**au moins une surface de l'élément d'isolation thermique comporte une structure de drainage pour l'eau.

14. Procédé selon la revendication 13, **caractérisé en ce que** la structure de drainage comporte une structure ondulée avec une pluralité d'élévations et de creux.

15. Procédé selon la revendication 12, comportant en outre l'étape consistant à apposer au moins un moyen de fixation (20) sur l'élément d'isolation (10) de telle sorte qu'il est relié à l'élément d'isolation (10) par adhérence et/ou par complémentarité de forme et/ou de matière, et une surface exposée du moyen de fixation (20) est sensiblement affleurante à la surface extérieure (16a, 16b, 16c) de l'élément d'isolation (10).

16. Procédé selon la revendication 15, comportant en outre l'étape consistant à appliquer une colle sur la surface exposée du moyen de fixation (20).

17. Procédé selon la revendication 15 ou 16, **caractérisé en ce qu'**est fournie une pluralité d'éléments d'isolation thermique (10) qui sont formés selon l'une des revendications 1 à 10, et **en ce qu'**entre les étapes de fourniture des éléments d'isolation thermique (10) et de pose du moyen de fixation (20) sur les éléments d'isolation (10), les éléments d'isolation (10) sont coupés en fonction des besoins pour s'adapter à la géométrie d'un compartiment intérieur du véhicule ferroviaire et sont repérés selon un plan de montage.
